# EUROPÄISCHE PATENTSCHRIFT

(11) **EP 0 348 714 B1**
(45) Veröffentlichungstag und Bekanntmachung des Hinweises auf die Patenterteilung: **01.09.1993**
(21) Anmeldenummer: 89110473.9
(22) Anmeldetag: 09.06.1989
(51) Int. Cl.: G02B 6/42, G02B 7/02

(54) **Vorrichtung zum Justieren und Fixieren einer Kugellinse sowie Verfahren zum Betrieb der Vorrichtung**
Device for adjustment and fastening of a spherical lens and method for using the device
Dispositif pour l'ajustage et la fixation d'une lentille sphérique et procédé pour l'utilisation du dispositif

(30) Priorität: 01.07.1988 DE 3822389
(43) Veröffentlichungstag der Anmeldung: 03.01.1990
(73) Patentinhaber: SIEMENS AKTIENGESELLSCHAFT, 80333 München (DE)
(72) Erfinder: Haltenorth, Helmut, Dr., D-8000 München 50 (DE)

(56) Entgegenhaltungen:
- EP-A- 0 021 473
- DE-A- 3 300 902
- US-A- 3 950 075
- US-A- 4 793 688

## Beschreibung

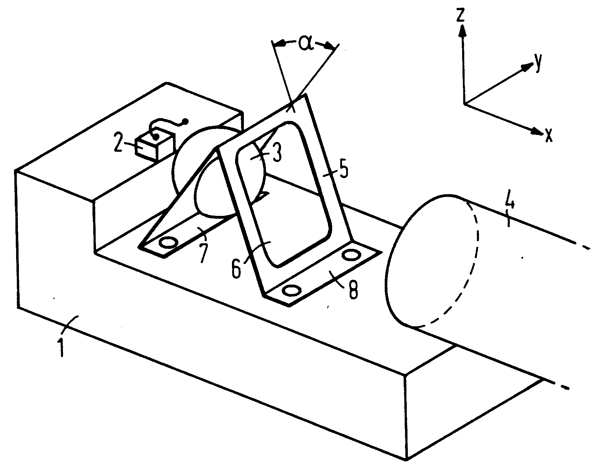

Die Erfindung bezieht sich auf eine Vorrichtung nach Patentanspruch 1 sowie auf ein Verfahren nach Anspruch 4 unter Verwendung dieser Vorrichtung. Eine Vorrichtung nach dem Oberbegriff des Anspruchs 1 ist z.B. aus den Firmendruckschriften der Hewlett Packard "Miniature Fibre Optic Logic Link" HFBR-0200 Series, Dezember 1981, Fig. 1 und "Lichtwellenleiterkomponenten zur Datenübertragung" 5953-7700 12/81, S.2 bekannt.

Bei der Datenübertragung über Lichtwellenleiter reicht es im allgemeinen nicht aus, das von einem lichtelektrischen Sendebaustein, z.B. einer Leuchtdiode, ausgehende Licht direkt in einen Lichtwellenleiter einzuspeisen, bzw. das aus einem Lichtwellenleiter austretende Licht direkt einem Empfangsbaustein, z.B. einer Fotodiode, zuzuführen, sondern es sind zusätzlich optische Mittel im Strahlengang des Sende- bzw. Empfangselementes anzuordnen, welche die Verluste beim Ein- bzw. Auskoppeln der Strahlung in bzw. aus dem Lichtwellenleiter möglichst gering halten. Hierzu werden üblicherweise Kugellinsen verwendet, die im jeweiligen Sende- bzw. Empfangsbaustein zwischen den lichtelektrischen Bauelementen und den Lichtwellenleitern angeordnet sind. Ihre Aufgabe ist es, das von einem lichtelektrischen Sendebauelement ausgehende Licht zu bündeln und in den Lichtwellenleiter einzuspeisen bzw. das aus dem Lichtwellenleiter austretende Licht auf ein lichtelektrisches Empfangselement zu fokussieren. Die Kugellinsen sind dabei in einer Aufhängung des Sende- bzw. Empfangsbausteines mechanisch gehalten.

Zum Erzielen der gewünschten Abbildungseigenschaften ist es notwendig, daß die Kugellinse zwischen dem jeweiligen lichtelektrischen Bauelement und dem Lichtwellenleiter hochgenau ausgerichtet ist. Diese Ausrichtung muß um so genauer sein, je höher die Anforderungen an das Übertragungssystem sind. Für Übertragungssysteme hoher Güte ist ein Justieren der Kugellinsen in den Sende- bzw. Empfangsbausteinen erforderlich.

Aufgabe der vorliegenden Erfindung ist es, eine Vorrichtung nach dem Oberbegriff des Patentanspruches 1 anzugeben, die es gestattet, eine Kugellinse auf einfache und wirtschaftliche Weise so im Sende- bzw. Empfangsbaustein anzuordnen, daß die geforderten optischen Abbildungseigenschaften erreichbar sind.

Die Erfindung löst diese Aufgabe durch die kennzeichnenden Merkmale des Patentanspruches 1. Vorteilhafte Ausbildungen der erfindungsgemäßen Vorrichtung sind in den Unteransprüchen 2 und 3 angegeben. Die Ansprüche 4 bis 6 betreffen ein Verfahren zum Betrieb der Vorrichtung nach den Ansprüchen 1, 2 oder 3. Die Erfindung ist nachstehend anhand eines in der Zeichnung dargestellten Ausführungsbeispieles näher erläutert.

Die Zeichnung zeigt schematisch eine im Sende- bzw. Empfangsbaustein einer lichtelektrischen Übertragungsstrecke angeordnete Unterlage 1 zur Aufnahme eines lichtelektrischen Bauelementes 2 und einer Kugellinse 3. Die Kugellinse 3 ist zwischen dem lichtelektrischen Bauelement 2 und einem Lichtwellenleiter 4 so auszurichten und zu fixieren, daß die geforderten optischen Abbildungseigenschaften erreicht werden. Hierzu ist die Kugellinse 3 in einem Träger 5 festgelegt, über den sie vor bzw. bei dessen Fixierung an der Unterlage 1 in allen drei Koordinaten X, Y und Z ausgerichtet werden kann. Der Träger 5 besteht aus einem bandförmigen Material, das quer zu seiner Längsachse abgewinkelt ist und dabei zwei Schenkel bildet, die V-förmig zusammenstoßen. Der eine Schenkel des Trägers ist mit einer Ausnehmung zur Aufnahme der Kugellinse 3 versehen; der andere weist einen dieser Ausnehmung gegenüberliegenden Durchbruch 6 für die vom lichtelektrischen Bauelement 2 ausgehende bzw. diesem zugeführte Strahlung auf. Die Kugellinse 3 ist im Träger 5 durch geeignete Maßnahmen wie Einglasen, Einlöten, Einschweißen, Einkleben oder Einpressen mechanisch fixiert. Der Träger weist an den Enden der beiden Schenkel abgewinkelte Laschen 7 und 8 auf, über die er an der Unterlage 1 zu befestigen ist. Die Unterlage 1 ist im Bereich des an ihr zu befestigenden Trägers 5 eben ausgeführt. Die Befestigung am Träger erfolgt vorzugsweise durch Verschweißen der Trägerlaschen mit der Unterlage. Hierzu besteht sowohl der Träger als auch die Unterlage aus einem schweißbaren Material, vorzugsweise einem Metall oder einer Metallegierung.

Der Vorgang des Justierens und Fixierens einer Kugellinse geht folgendermaßen vor sich: Zunächst ist die Kugellinse 3 durch Verschieben des Trägers in X- und Y-Richtung und Einstellen des Spreizwinkels α zwischen den beiden Schenkeln des Trägers im optischen Strahlengang auszurichten; dies wird mittels einer geeigneten Meßapparatur festgestellt. Sodann wird der die Kugellinse 3 aufnehmende Schenkel des Trägers an der Unterlage 1 fixiert, indem der Schenkel über die abgewinkelte Lasche 7 mit der Unterlage 1 verschweißt wird; die Schweißpunkte sind in der Zeichnung durch Kreise angedeutet. Anschließend wird die Ausrichtung bzw. Fokussierung der Strahlung auf den Lichtwellenleiter bzw. das lichtelektrische Bauelement kontrolliert und, sofern es erforderlich ist, wird die Anordnung der Kugellinse in ihrer Höhe durch Einstellen des Spreizwinkels α zwischen den beiden Schenkeln des Trägers 5 korrigiert. Anschließend wird auch der andere Schenkel des Trägers 5 mit der Unterlage 1 verschweißt. Das Aufbringen des Trägers auf die Unterlage und das Justieren des Trägers erfolgt vorzugsweise über ein Greifwerkzeug zur feinfühligen Positionierung und Einstellung des Trägers. Nach dem Verschweißen des Trägers mit der Unterlage 1 ist die Kugellinse im Strahlengang zwischen lichtelektrischem Bauelement und Lichtwellenleiter mechanisch fixiert.

Der besondere Vorteil der erfindungsgemäßen Vorrichtung ist darin zu sehen, daß das hochgenaue Justieren und Fixieren einer Kugellinse unter Verwendung eines als kostengünstiges Stanz/Prägeteil ausgebildeten Träger mit nur geringen Toleranzanforderungen möglich ist. Die Punktschweißungen von Träger und Unterlage erfordern nur sehr kurze Standzeiten des Greifwerkzeuges während des Fixiervorganges. Die thermische Belastung der umgebenden Strukturen während des Schweißvorganges ist gering; ein eventueller Schweißverzug beim Verschweißen des ersten Trägerschenkels kann durch Nachjustieren des Trägers aufgefangen werden. Gegebenenfalls lassen sich auch mehrere, mit je einer Kugellinse versehene Vorrichtungen im Sende- bzw. Empfangsbaustein einer lichtelektrischen Übertragungsstrecke anordnen.

## Patentansprüche

1. Vorrichtung zum Justieren und Fixieren einer Kugellinse (3) im optischen Strahlengang vor einem lichtelektrischen Bauelement (2), welches auf einer Unterlage (1) fixiert ist, bestehend aus einem für die Aufnahme der Kugellinse und zur Montage auf der Unterlage im Strahlengang vor dem lichtelektrischen Bauelement vorgesehenen Halteelement, **dadurch gekennzeichnet,** daß das Halteelement als ein quer zu seiner Längsachse abgewinkelter bandförmiger Träger (5) ausgebildet ist, dessen beide Schenkel ein zur Achse des Strahlengangs im wesentlichen senkrecht stehendes "V" bilden, daß der eine Schenkel des Trägers mit einer öffnung zur Aufnahme der Kugellinse (3) und der andere mit einem dieser öffnung gegenüberliegenden Durchbruch (6) für die vom lichtelektrischen Bauelement (2) ausgehende bzw. diesem zugeführte Strahlung versehen ist und daß beide Schenkel des Trägers an ihren Enden abgewinkelte Laschen (7, 8) für die Befestigung des Trägers an der Unterlage (1) aufweisen.

2. Vorrichtung nach Anspruch 1, **dadurch gekennzeichnet,** daß der Träger (5) und die Unterlage (1) aus einem schweißbaren Material bestehen und daß die abgegewinkelten Schenkellaschen (7, 8) des Trägers mit der Unterlage verschweißt sind.

3. Vorrichtung nach Anspruch 2, **dadurch gekennzeichnet,** daß der Träger und die Unterlage aus einem Metall oder einer Metallegierung bestehen.

4. Verfahren zur Justierung einer Kugellinse (3) im Strahlengang zwischen einem Lichtwellenleiter (4) und einem auf einer Unterlage (1) befestigten lichtelektrischen Element unter Verwendung der Vorrichtung nach Anspruch 1, 2 oder 3, bei dem die Kugellinse in die Öffnung in dem einen Schenkel des Trägers (5) der Vorrichtung nach Anspruch 1, 2 oder 3 eingesetzt wird, und bei dem der Träger mit den Laschen (7, 8) so auf die Unterlage aufgesetzt, auf dieser so ausgerichtet und durch Einstellen des Spreizwinkels (α) zwischen den beiden Schenkein (7, 8) des Trägers in seiner Höhe so eingestellt wird, daß die vom lichtelektrischen Bauelement (2) ausgehende bzw aus dem Lichtwellenleiter (4) austretende, die Kugellinse (3) durchdringende Strahlung als paralleles oder fokussiertes Strahlenbündel auf die Lichteintrittsseite des Lichtwellenleiters (4) ausgerichtet bzw. als konvergierendes Strahlenbündel auf das lichtelektrische Bauelement (2) fokussiert ist und bei dem der Träger dann in dieser Lage und Stellung über die endseitigen Laschen (7, 8) der Schenkel an der Unterlage (1) befestigt wird.

5. Verfahren nach Anspruch 4, bei dem der Träger (5) zunächst über die an dem einen Schenkel befindliche(n) Lasche(n) (7) an der Unterlage (1) befestigt wird, dann die Ausrichtung bzw Fokussierung der Strahlung auf den Lichtwellenleiter (4) bzw. das lichtelektrische Bauelement (2) kontrolliert wird, wobei gegebenenfalls durch Ändern des Spreizwinkels (α) eine Korrektur des Strahlenganges in der Höhe vorgenommen wird und zuletzt auch der zweite Schenkel des Trägers über die an seinem Ende befindliche(n) Lasche(n) (8) befestigt wird.

6. Verfahren nach Anspruch 4 oder 5, bei dem der Träger auf der Unterlage mittels eines Greifwerkzeuges ausgerichtet wird.

## Claims

1. Device for adjusting and fixing a spherical lens (3) in the optical beam path in front of a photoelectric component (2) which is fixed on a base (1), consisting of a holding element which is provided to accommodate the spherical lens and for the purposes of assembly on the base in the beam path in front of the photoelectric component, characterised in that the holding element is formed as a band-shaped carrier (5) which is bent crosswise relative to its longitudinal axis and the two legs of which form a "V" which is substantially perpendicular to the axis of the beam path, in that the one leg of the carrier is provided with an opening for accommodating the spherical lens (3) and the other leg is provided with a cutout (6) which lies opposite this opening for the radiation which comes from the photoelectric component (2) or is directed to the latter, and in that both legs of the carrier have at their ends fixing plates (7, 8) which are bent away for the securement of the carrier to the base (1).

2. Device according to claim 1, characterised in that the carrier (5) and the base (1) consist of a weldable material and in that the bent away leg-fixing plates (7, 8) of the carrier are welded to the base.

3. Device according to claim 2, characterised in that the carrier and the base consist of a metal or a metal alloy.

4. Method for adjusting a spherical lens (3) in the beam path between an optical waveguide (4) and a photoelectric element which is secured to a base (1) using the device according to claim 1, 2 or 3, in which the spherical lens is inserted into the opening in the one leg of the carrier (5) of the device according to claim 1, 2 or 3, and in which the carrier with the fixing plates (7, 8) is set upon the base in such a way, is aligned therewith in such a way and is set in terms of its height by setting the angle of spread (α) between the two legs (7, 8) of the carrier in such a way that the radiation which comes from the photoelectric component (2) or emerges from the optical waveguide (4) and penetrates the spherical lens (3) is aligned as a parallel or focused beam of rays in respect of the light-entry side of the optical waveguide (4) or is focused as a converging beam of rays in respect of the photoelectric component (2) respectively, and in which the carrier is then secured to the base (1) in this location and position by way of the end-side fixing plates (7, 8) of the legs.

5. Method according to claim 4, in which the carrier (5) in the first instance is secured to the base (1) by way of the fixing plate(s) (7) located on the one leg, then the alignment or focusing of the radiation in respect of the optical waveguide (4) or the photoelectric component (2) respectively is checked, in which case, if applicable, by varying the angle of spread (α) the beam path is corrected in terms of height, and finally the second leg of the carrier is secured as well by way of the fixing plate(s) (8) located at its end.

6. Method according to claim 4 or 5, in which the carrier is aligned on the base by means of a gripping tool.

## Revendications

1. Dispositif pour ajuster et fixer une lentille sphérique (3) dans le trajet du rayonnement optique en avant d'un composant photoélectrique (2), qui est fixé sur une base de support (1), constitué par un élément de réception destiné à loger la lentille sphérique et prévu pour le montage sur la base de support dans le trajet du rayonnement en avant du composant photoélectrique, caractérisé par le fait que l'élément de retenue est agencé sous la forme d'un support en forme de bande (5), qui est coudé transversalement par rapport à son axe longitudinal et dont les deux branches forment un "V" sensiblement perpendiculaire à l'axe du trajet de rayonnement, qu'une branche du support comporte une ouverture servant à loger la lentille sphérique (3) et l'autre branche comprend un passage (6) situé en vis-à-vis de cette ouverture, et prévu pour le rayonnement issu du composant photoélectrique (2) ou envoyé à ce composant, et que les deux branches du support comportent, au niveau de leurs extrémités, des pattes repliées (7,8) permettant de fixer le support sur la base de support (1).

2. Dispositif suivant la revendication 1, caractérisé par le fait que le support (5) et la base de support (1) sont réalisés en un matériau soudable et que les pattes repliées (7,8) des branches du support sont soudées à la base de support.

3. Dispositif suivant la revendication 2, caractérisé par le fait que le support et la base de support sont réalisés en un métal ou en un alliage métallique.

4. Procédé pour ajuster une lentille sphérique (3) dans le trajet du rayonnement entre un guide d'ondes optique (4) et un élément photoélectrique, fixé sur une base de support (1), moyennant l'utilisation du dispositif suivant la revendication 1, 2 ou 3, selon lequel on introduit la lentille sphérique dans l'ouverture ménagée dans une branche du support (5) du dispositif selon la revendication 1, 2 ou 3, et selon lequel on monte le support au moyen des pattes (7,8) sur la base de support, on l'aligne sur cette base de support et on en règle la hauteur par réglage de l'angle d'écartement (α) entre les deux branches (7,8) du support de manière que le rayonnement issu du composant photoélectrique (2) ou issu du guide d'ondes optiques (4) et qui traverse la lentille sphérique (3), est aligné sous la forme d'un faisceau de rayonnement parallèle ou focalisé, sur le côté d'entrée de la lumière du guide d'ondes optiques (4) ou est focalisé sous la forme d'un faisceau de rayonnement convergent sur le composant photoélectrique (2) et selon lequel on fixe ensuite le support dans cette position par l'intermédiaire des pattes d'extrémité (7,8) des branches sur la base de support (1).

5. Procédé suivant la revendication 4, selon lequel on fixe tout d'abord le support (5) par l'intermédiaire de la ou des pattes (7) fixées sur les branches, sur la base de support (1), puis on contrôle l'alignement ou la focalisation du rayonnement sur le guide d'ondes optiques (4) ou sur le composant photoélectrique (2), auquel cas on réalise éventuellement, par modification de l'angle d'écartement (α), une correction du trajet de rayonnement en hauteur et enfin on fixe également la seconde branche du support au moyen de la ou des pattes (8) fixées à l'extrémité de cette branche.

6. Procédé suivant la revendication 4 ou 5, selon lequel on aligne le support sur la base de support au moyen d'un outil de préhension.
